# EUROPEAN PATENT APPLICATION

(11) **EP 2 250 907 A1**
(43) Date of publication of application: **17.11.2010**
(21) Application number: 09159927.4
(22) Date of filing: 11.05.2009
(51) Int. Cl.: A23L 1/10, A23L 1/168, A23L 1/182

(54) **Grain-based food compositions and processes for their preparation**

(71) Applicant: Bühler AG, 9240 Uzwil (CH)
(72) Inventor: Kunz, Roland, 8583 Donzhausen (CH); Meyer, Markus, 9322 Egnach (CH)
(74) Representative: Hepp, Dieter

(57) **Abstract**

The present invention relates to a process for manufacturing reconstituted grain kernels, in particular rice kernels. Said process comprises the steps of hydrating a mixture of comminuted grain matrix material, with at least an emulsifier to obtain a paste and moving the paste obtained while heating to 70 °C to 100 °C for 30 s to 5 min until starch is semigelatinized. In a second step, the semigelatinized mass is formed to obtain reconstituted grain kernels similar or equal to the size and shape of natural grain kernels, particularly rice kernels, wherein the reconstituted grain kernels contain 20 to 52 wt.-% of water, and particularly 35 to 45 wt.-% of water. Further, the present invention relates to the reconstituted grain kernels thus obtained and to using said kernels in milk rice.

## Description

The present invention relates to a process for manufacturing reconstituted grain kernels, in particular kernels of the Poaceae family, e. g. rice, wheat, oat, soya, barley or corn. More particularly, the present invention relates to a process for manufacturing reconstituted grain kernels, the reconstituted grain kernels thus obtained and using said kernels in milk rice.

Rice-based food compositions and processes for their preparation are disclosed in WO 2005/053433. Therein, the raw rice material is formed to reconstituted rice by hydrating of the comminuted rice matrix material, forming same and drying the rice grains. During the process, several micronutrients are added. The grains have a moisture content of no more than 15 wt.-%.

French patent publication No. 1,530,248 describes fortified artificial kernels, prepared from a dough of semolina or flour and vitamins, which might contain in addition processing aids like mono-di-glycerides or proteins. The dough is formed to a pasta-like structure by pressing it through a dough press. Then the strands are cut into pieces, which are finally dried. The artificial kernels are mixed with natural grains in a relation of 1:20 up to 1:1000, particularly between 1:50 up to 1:500. However, the kernels prepared according to this method do not always show a sufficient cooking stability, meaning that the artificial grains tend to disintegrate during cooking and thus release the vitamins to the cooking water which is finally poured off.

US patent No. 3,620,762 discloses a process for producing enriched artificial rice by kneading rice flour, nutrients and if necessary a binder, and then steaming the mixture in order to semigelatinize (i.e. partially gelatinize) the starch. After that the product is granulated in order to get grains similar to rice, which finally might be coated. However, this method requires a quite long time for steam treatment of about 15 to 30 min, which can lead to processing losses of sensitive micronutrients like vitamins, and in addition the harsh heating conditions will negatively influence the taste of the artificial grains. Both disadvantages are also true for the method disclosed in US 4,446,163 in which gelatinizing is done by saturated steam in an autoclave.

A method to reduce heating time is extrusion, which has been described several times for the preparation of artificial rice grains. However, in most of the publications the preparation conditions lead to fast-cooking products or even instant products.

Japanese patent publication JP 61 037068 also describes the preparation of artificial rice by extrusion, but the preparation conditions lead to an expanded product. As commonly known, expanded products have a reduced density. They will separate easily from natural rice grains. This problem is described in JP 58 005148, too. In order to solve it, the addition of a density-increasing agent in a relatively high amount is necessary.

The process disclosed in JP 2002 233317 uses a combination of rice-derived healthy ingredients including vitamins and minerals together with a starchy matter and brown rice or ground brown rice in order to produce artificial rice by extrusion. However, the method needs a "gelatinizing agent" like gelatine, pectin, gums or other binders. Furthermore, only a low vitamin enrichment is achieved and the products do not provide micronutrients like vitamin A, which are naturally not present in rice.

The process disclosed in US 5,609,896 once more uses extrusion technology to prepare artificial enriched rice kernels, and overcomes the problem of insufficiently stable kernels and consecutive vitamin loss by adding specific ingredients, viz., a heat stabilizing agent (e. g. sulfites); a binding agent (e. g. solubilized proteins, gums, polysaccharides); a crosslinking agent (e. g. edible aldehydes, glutaraldehyde volatile acids); and an aqueous agent (mainly water).

However, several of the required ingredients - especially from the group of the heat stabilizing and the cross-linking agents - are under discussion to cause allergenic reactions, or to be potentially carcinogenic. Furthermore, the production process consists of several steps, which makes its implementation more difficult and costly.

It is the object of the present invention to provide a process for manufacturing reconstituted grain kernels which are more suitable for the production of, for example, milk rice and which, in particular, have a texture suitable for this purpose.

It was found that this object is achieved by increasing the water content of the reconstituted grain kernels as compared to known processes. Thus, the present invention relates to a process for manufacturing of reconstituted grain kernels, in particular kernels of the Poaceae family, e. g. rice, wheat, oat, soya, barley, or corn, said process comprising the steps of:
➢ (A) hydrating a mixture of a comminuted grain matrix material containing rice, wheat, oat, soya, barley and/or corn, with at least an emulsifier to obtain a paste and moving, especially shifting the paste obtained, in particular in a preconditioner, while heating to about 70 °C to 100 °C for 30 seconds to 5 minutes until starch contained in the grain matrix material is semigelatinized;
➢ (B) forming the semigelatinized mass to obtain reconstituted grain kernels similar or equal to the size and shape of natural grain kernels, particularly rice kernels,
   wherein the reconstituted grain kernels contain 20 to 52 wt.-% of water, particularly 35 to 45 wt.-% of water.

The temperature in the hydrating step (A) has to be above the gelatinisation temperature of starch. The temperature is preferably between 70 °C and 100 °C, more preferably between 80 °C and 100 °C, even more preferably between 90 °C and 100 °C, most preferably approximately 95 °C.

An additive, in particular a micronutrient, can be added to the paste during or after step (A) and before step (B).

It is possible to add an additive, particularly selected from the group consisting of milk protein, skim milk powder, whole milk powder or fresh milk, to the paste during or after step (A) and before step (B).

Step (B) of thermal-mechanical treatment of the mass may be carried out in an extruder. Preferably, the thermal-mechanical treatment is carried out at a water content of the mixture between 32 wt.-% and 52 wt.-%. Preferably, the thermal-mechanical treatment is carried out during a dwell time of 5 s to 120 s, preferably 5 s to 90 s, most preferably 15 s to 30 s, in particular in the extruder. With preference, the temperature during step (B) is between 60 °C and 150 °C, preferably between 80 °C and 120 °C and has at least a minimal temperature difference of 15 °C to 35 °C. In particular, the temperature difference between step (A) and step (B) can be between 15 °C and 35 °C. Water and/or steam can be added in step (B).

In step (B) the mass can be expanded and the reconstituted grain kernels can contain 20 to 35 wt.-% of water.

Step (A) can be conducted in a preconditioner at a temperature in the range of about 70 °C to 100 °C, preferably at an added water content of 20 wt.-% to 40 wt.-% and preferably during a dwell time of 30 s to 5 min, preferably 1,5 min to 2,5 min. Added water may be tap water and/or a condensate from added steam, preferably saturated steam.

The thermal-mechanical treatment may be carried out in the extruder at a temperature of between 60 °C and 150 °C, more preferably at a temperature of between 80 °C and 120 °C.

It is possible to add further components in step (B) to the mass.

The added components can include at least one element of the group comprising vitamins, binding agents, vegetable or dietary fibers such as cellulose, hemicellulose, pentosan, pectin, aleurone etc.

Step (B) may be carried out by compressing the semigelatinized mass, pressing the mass through a nozzle plate and subsequently cutting the strands of pressed mass.

An emulsifying agent may be mixed into the mass during the thermal-mechanical treatment of step (B).

The invention further relates to the use of reconstituted grain kernels, in particular reconstituted rice kernels, to provide a food product. The food product according to the invention contains reconstituted grain kernels and at least one liquid component, e. g. milk, a water-based liquid or any savoury liquid. In particular, the invention relates to milk rice.

The subsequent description is directed only to rice, although all types of grain may be included therein, in particular kernels of the Poaceae family, e. g. wheat, oat, soya, barley or corn.

The comminuted rice matrix material used in the process of the invention may be broken, cracked or otherwise degraded rice grains which are at least partially, or predominantly comminuted, such as rice semolina or rice flour. This matrix material may be hydrated by adding water and/or steam to a water content of 15 - 52wt.-% and an emulsifier. Examples of emulsifiers are lecithins or mono- or diglycerides of C141 s- fatty acids, or mixtures thereof. Suitably, about 0.5 wt.-% to about 3 wt.-% of emulsifier are used, based on the total weight of the composition. The micronutrients are usually added in a powder form, but oily vitamins like vitamin A or vitamin E may also be used as oils. However, powdered product forms of oil-soluble vitamins are preferred because of the easier handling of these kinds of preparations. Furthermore, the powdered product forms themselves may provide a certain protection to sensitive micronutrients. The hydrated mixture is exposed to shear force, e. g., kneaded, to form a paste-like mixture with heating for 30 seconds to 5 minutes, to about 70 °C to 100 °C. The heating and moving procedure is referred to hereinafter as "preconditioning".

Heating can be accomplished by an external heating source or, preferably, by introducing steam during the process of producing the paste-like mixture. While all the components, i. e. matrix material (rice semolina or flour), emulsifier and micronutrients may be mixed before wetting it is preferred to first produce a paste-like mixture of the rice matrix material and emulsifier. In step (B), further processing of the preconditioned mass as obtained in step (A) can be accomplished any method used in food technology for processing dough into strands and is suitably carried out by extrusion using conventional gear. In a preferred embodiment of the invention, a double screw extruder is used. The temperature in the extruder may be 60 °C to 150 °C and preferably 80 °C to 120 °C with a residence time of the mixture in the extruder being suitably about 5 to 120 s, preferably 5 s to 90 s, most preferably 15 s to 30 s. The strands leaving the extruder are adjusted to a diameter similar to that of rice grains and are cut into pieces having the size and shape of rice grains. The so obtained grains have a moisture content of 35 to 45 wt.-% and can be used directly in a liquid, e. g. milk, as milk rice.

The use of broken rice as a low-priced raw material contributes to lowering overall production costs. Furthermore, this process allows the addition of any kinds of additives during steps (A) and (B).

The thermal-mechanical treatment may preferably be carried out without significantly further comminuting the particles of the broken rice matrix material. Practically speaking, this means that the starting material will most likely be a mixture of broken rice particles and more or less rice flour. The prevention of any significant further comminution may be achieved by reducing the overall shear to which the product is exposed during the inventive process. To that end, a preconditioner alone or a preconditioner combined with a subsequent low shear extruder may be used for the hydrothermal-mechanical treatment. In other words, in step (A) the mechanical contribution is less pronounced than the hydrothermal contribution. As a result, the reconstituted rice kernels thus obtained have a composite structure of still identifiable broken rice particles held together by a floury starch matrix. This inhomogeneous structure has interesting organoleptic properties and lends itself for adjusting the bite of reconstituted kernels of this type by adjusting the average particle sizes of the larger component fraction (broken rice) and the smaller component fraction (rice flour).

Prior to the forming step (B) further substances may be added to the at least partially gelatinized broken rice matrix material. Such additions may include elements of the group comprising vitamins, binding agents, vegetable or dietary fibers such as cellulose, hemicellulose, pentosan, pectin, aleurone etc. or mixtures thereof.

Vegetable fibers, just like binding agents, may help strengthen the reconstituted rice kernels.

Step (B) itself may be carried out by compressing the semigelatinized broken rice matrix material which forms a paste, pressing the matter through a nozzle plate and subsequently cutting the strands of pressed matter. In this case it is preferred to mix an emulsifying agent into the matter during the thermal-mechanical treatment of step (A). The emulsifier helps prevent sticking between the reconstituted rice kernels when they exit the nozzle plate. Also, the emulsifier helps prevent the formation of cracks ("shark skin effect") and pores at the surface of the extrudates.

The nozzle plate preferably includes several individual nozzles and a rotating knife for cutting the product strands squeezed through the nozzles. Thus, the size and shape of the reconstituted rice kernels may be determined by choosing the cross section of the nozzles, adjusting the pressure build-up and/or extrusion speed in the product and the speed of the rotating knife. As a result, many types of natural rice can be imitated. Even some fancy shapes (little horses, dinosaurs, etc.) are possible.

In a particularly advantageous version of the process according to the invention a water barrier layer is formed at the surface of the shaped rice-based structures during or after the forming step (B).

This water barrier layer reduces the diffusion rate of water into the reconstituted rice-based kernels, thus increasing the stability of the reconstituted rice kernels.

The formation of the water barrier layer may be carried out by at least partial gelatinization, preferably by complete gelatinization, of the starch at the surface of the rice containing structures having a shape similar to or like natural rice kernels.

In addition or alternatively, the formation of the water barrier layer may be carried out by irreversibly cross-linking the starch at the surface of the rice containing structures having a shape similar to or like natural rice kernels. Preferably, this is done by adding a temperature-triggered cross-linking agent to the matter during the thermal-mechanical treatment of step (A) or during the forming step (B).

In addition or alternatively, the formation of the water barrier layer may be carried out by depositing a hydrocolloid film onto the surface of the rice containing structures having a shape similar to or like natural rice kernels.

Preferably, the formation of the water barrier layer is achieved by surface hardening or surface densification of the product. This surface hardening or surface densification may be carried out during or after the forming step. This surface hardening or surface densification is preferably carried out at temperatures of between 80 °C and 200 °C and for a period of between 10 s and 3 min.

Advantageously, for organoleptic reasons, the measures as described in the previous paragraphs are carried out individually or in combination to such a degree that the firmness ("bite") of the reconstituted rice is adjusted to be suitable for milk rice.

Alternatively, a colorant may be added during the thermal-mechanical treatment of step (A), giving the recon rice thus obtained a colour equal to or different from the colour of natural rice kernels.

The reconstituted rice kernels can be mixed in a liquid component, e. g. milk, wherein the liquid component may contain further additives for different purposes, e. g. texture/consistency, taste, optical appearance like colour etc.

## Claims

1. A process for manufacturing of reconstituted grain kernels, in particular kernels of the Poaceae family, e. g. rice, wheat, oat, soya, barley or corn, said process comprising the steps of:
➢ (A) hydrating a mixture of a comminuted grain matrix material derived from grain kernels with at least an emulsifier to obtain a paste and moving, in particular shifting the paste obtained, in particular in a preconditioner, while heating to 70 °C to 100 °C for 30 s to 5 min, preferably 1.5 min to 2.5 min, until starch contained in the grain matrix material is semigelatinized;
➢ (B) forming the semigelatinized mass to obtain reconstituted grain kernels similar or equal to the size and shape of natural grain kernels, particularly rice kernels,
wherein the reconstituted grain kernels contain 20 to 52 wt.-% of water, preferably 35 to 45 wt.-% of water.

2. The process according to claim 1, wherein an additive, particularly selected from the group consisting of milk protein, skim milk powder, whole milk powder, components of milk, and fresh milk, is added to the paste during or after step (A) and before step (B).

3. The process according to any of the previous claims wherein step (B) of thermal-mechanical treatment of the mass is carried out in an extruder.

4. The process according to any of the previous claims, wherein step (B) of thermal-mechanical treatment of the mass is carried out at a water content of the mixture between 32 wt.-% and 52 wt.-%.

5. The process according to any of the previous claims, wherein step (B) of thermal-mechanical treatment of the mass is carried out during a dwell time of 5 s to 120 s, preferably 5 s to 90 s, most preferably 15 s to 30 s, in particular in the extruder.

6. The process according to any of the previous claims wherein in step (B) the mass is expanded and the reconstituted grain kernels contain 20 to 35 wt.-% of water.

7. The process according to any of the previous claims, wherein step (A) is conducted in a preconditioner at a temperature in the range of about 70 °C to 100 °C, preferably at an added water content of 20 wt.-% to 40 wt.-% and preferably during a dwell time of 30 s to 5 min, preferably 1,5 min to 2,5 min.

8. The process according to any of the previous claims, wherein water and/or steam are added in step (B).

9. The process according to any of the previous claims, wherein step (B) of thermal-mechanical treatment is carried out at a temperature of between 60 °C and 150 °C, more preferably at a temperature of between 80 °C and 120 °C, in particular in the extruder.

10. The process according to any of the previous claims, wherein an emulsifying agent is mixed into the mass during the thermal-mechanical treatment of step (B).

11. The process according to any of the previous claims, wherein a temperature-triggered cross-linking agent is added to the matrix material during the hydrothermal-mechanical treatment of step (A) or during the forming step (B).

12. Reconstituted grain kernels obtainable by a process according to one of claims 1 to 11.

13. Use of reconstituted grain kernels according to claim 12 or as manufactured according to any of claims 1 to 11 to provide a food product, in particular milk rice, containing reconstituted grain kernels, in particular reconstituted rice kernels, and at least one liquid component, in particular milk, wherein said reconstituted grain kernels, in particular rice kernels, are mixed in at least one liquid component, in particular milk.

14. Use of the reconstituted rice kernels according to claim 13, wherein the liquid component contains further additives, in particular additives influencing texture and/or consistency and/or taste and/or optical appearance, in particular colour, of the food product.
